# FASCICULE DE BREVET EUROPEEN

(11) **EP 3 997 050 B1**
(45) Date de publication et mention de la délivrance du brevet: **11.06.2025**
(21) Numéro de dépôt: 20746084.1
(22) Date de dépôt: 30.06.2020
(51) Int. Cl.: C04B 35/571, C04B 35/573, C04B 38/00, B33Y 10/00, B33Y 80/00, B01D 46/24

(54) **STRUCTURE POREUSE EN CERAMIQUE POUR PIECE EN MATERIAU CMC ET PROCEDE POUR L'OBTENIR**
PORÖSE KERAMIKSTRUKTUR FÜR EIN TEIL AUS CMC-MATERIAL UND VERFAHREN ZU DEREN HERSTELLUNG
POROUS CERAMIC STRUCTURE FOR PART MADE OF CMC MATERIAL AND METHOD FOR OBTAINING SAME

(30) Priorité: 10.07.2019 FR 1907733
(43) Date de publication de la demande: 18.05.2022
(73) Titulaire: Safran Ceramics, 33185 Le Haillan (FR)
(72) Inventeur: LACOMBE, Benjamin, 77550 MOISSY-CRAMAYEL (FR); GARNIER, Gildas, 77550 MOISSY-CRAMAYEL (FR)
(74) Mandataire: Cabinet Beau de Loménie
(86) Numéro de dépôt international: PCT/FR2020/051144
(87) Numéro de publication internationale: WO 2021/005285

(56) Documents cités:
- WO-A1-2019/106282
- PAOLO COLOMBO ET AL: "Additive manufacturing techniques for fabricating complex ceramic components from preceramic polymers", AMERICAN CERAMIC SOCIETY BULLETIN., vol. 96, no. 3, 1 April 2017 (2017-04-01), US, pages 16 - 23, XP055569321, ISSN: 0002-7812
- MAURATH JOHANNES ET AL: "3D printing of open-porous cellular ceramics with high specific strength", JOURNAL OF THE EUROPEAN CERAMIC SOCIETY, ELSEVIER SCIENCE PUBLISHERS, BARKING, ESSEX, GB, vol. 37, no. 15, 9 June 2017 (2017-06-09), pages 4833 - 4842, XP085182414, ISSN: 0955-2219, DOI: 10.1016/J.JEURCERAMSOC.2017.06.001
- ANDREA ZOCCA ET AL: "SiOC ceramics with ordered porosity by 3D-printing of a preceramic polymer", JOURNAL OF MATERIALS RESEARCH, vol. 28, no. 17, 23 May 2013 (2013-05-23), pages 2243 - 2252, XP055201305, ISSN: 0884-2914, DOI: 10.1557/jmr.2013.129

## Description

### Domaine Technique

L'invention se rapporte au domaine des renforts de pièces en matériau composite à matrice céramique et aux procédés de fabrication de telles pièces. L'invention concerne plus particulièrement une structure poreuse destinée à former un renfort de pièce en matériau composite à matrice céramique.

### Technique antérieure

Les matériaux composites à matrice céramique (CMC), connus pour leurs bonnes propriétés mécaniques qui les rendent aptes à constituer des éléments de structures et pour conserver ces propriétés à températures élevées, constituent une alternative viable aux traditionnelles pièces métalliques. Leur masse réduite et leur meilleure tenue en température par rapport à leur équivalent métallique en font des pièces de choix pour répondre aux problématiques d'augmentation du rendement et de réduction des émissions polluantes des moteurs dans le domaine aéronautique.

Les pièces en matériau CMC peuvent comprendre un renfort fibreux généralement continu sous la forme d'un textile tissé, qui est densifié par une matrice céramique. Le renfort fibreux comprend ainsi des fibres longues continues, dont l'orientation peut être adaptée aux directions principales de sollicitation de la pièce lors de son utilisation. La préforme destinée à former le renfort fibreux est tissée à partir des fibres continues aux dimensions de la pièce (par exemple par tissage bidimensionnel ou tridimensionnel), à l'aide d'un métier à tisser adapté. L'étape de tissage est un processus long et coûteux. Ensuite, il faut mettre en forme l'ébauche qui est tissée à l'aide par exemple d'un conformateur et/ou consolider l'ébauche avant la densification, ce qui augmente encore le nombre d'étapes à réaliser et donc les coûts. Ces dernières étapes sont aussi sources de variations dans la répétabilité du procédé de fabrication d'une pièce en CMC.

Il existe donc un besoin pour un procédé de fabrication d'une pièce en matériau composite à matrice céramique qui soit plus aisé à mettre en œuvre et moins couteux pour fabriquer des pièces en CMC.

Le document WO 2019/106282 A1 divulgue un procédé de fabrication additive d'une structure poreuse en céramique destinée à former le renfort d'une pièce en matériau composite à matrice céramique, la structure présentant une porosité connectée délimitée par une surface interne, la structure étant divisible en une pluralité de volumes élémentaires de taille inférieure à 5 mm³ dans chacun desquels la longueur caractéristique de pore est inférieure ou égale à 0,5 mm et un taux de porosité d'au moins 50%.

### Exposé de l'invention

L'invention propose à cet effet, selon un premier aspect, une structure poreuse en céramique destinée à former le renfort d'une pièce en matériau composite à matrice céramique, la structure présentant une porosité connectée délimitée par une surface interne qui comprend une pluralité de premiers points, à chaque premier point étant associé un deuxième point aligné avec ce premier point le long d'une normale à la surface interne prise au premier point, la structure étant divisible en une pluralité de volumes élémentaires de taille inférieure ou égale à 5 mm³ dans chacun desquels :
- une longueur caractéristique de pore, correspondant au maximum de la distance séparant chaque premier point de son deuxième point associé, est inférieure ou égale à 0,5 mm ; et
- un taux de porosité est supérieur ou égal à 50% ;
et comprenant une pluralité d'éléments de structure (22) relies entre eux qui définissent la porosité connectée, dans laquelle, dans chaque volume élémentaire (20), un taux de pontage surfacique correspondant au rapport entre la somme des surfaces reliant deux éléments de structure (22) entre eux et la somme des surfaces libres des éléments de structure est inférieur ou égal a 15%, dans laquelle les éléments de structure (22) sont des poutres et dans laquelle les poutres (22) sont agencées de manière a former une structure 4D ou les poutres sont orientées selon quatre directions données par les diagonales d'un cube.

La structure poreuse selon l'invention est une structure qui se distingue d'un renfort fibreux classiquement utilisé pour fabriquer une pièce en matériau CMC. On peut voir la fonction du renfort dans une pièce en matériau CMC comme étant de former un réseau de pores suffisamment petits pour s'affranchir de la statistique de Weibull qui régit la fragilité des céramiques massives. Cette statistique enseigne notamment que la fragilité (ou probabilité de rupture) d'un matériau céramique massif est proportionnelle à sa taille. Avec la structure poreuse selon l'invention, on peut disposer d'un renfort particulièrement adapté pour obtenir une pièce en matériau CMC ayant des propriétés qui varient peu dans la pièce, et une porosité connectée définie par une longueur caractéristique de pore maximale qui assure une plus grande tenue du matériau à la rupture, c'est-à-dire qui réduit la fragilité du matériau.

La longueur caractéristique de pore est un paramètre caractéristique de la taille des pores dans la structure poreuse. Comme indiqué précédemment, limiter la taille des pores permet d'augmenter la tenue de la pièce en matériau CMC.

Les simulations de probabilités de rupture montrent que passer d'une céramique massive de plusieurs millimètres cubes à une pièce en CMC ayant une structure à porosité connectée en tant que renfort avec une porosité supérieure à 50% et où les pores sont caractérisés par une longueur caractéristique inférieure ou égale à 0,5 mm permet d'augmenter au moins par deux la tenue de la pièce.

La divisibilité de la structure poreuse en une pluralité de volumes élémentaires ayant des propriétés bien définies, notamment concernant la longueur caractéristique de pore et sa porosité, n'est pas possible avec un renfort fibreux tissé classique. Une telle divisibilité assure une certaine homogénéité de la structure poreuse qui est avantageuse au sein d'une pièce en matériau CMC.

Il n'est plus nécessaire d'utiliser de conformateur en graphite puisque la structure poreuse selon l'invention peut avoir directement la forme voulue pour être densifiée directement. Une structure poreuse selon l'invention peut être avantageusement obtenue par fabrication additive, ce qui donne la possibilité de fabriquer une grande variété de structures poreuses différentes selon l'application envisagée.

Dans un exemple de réalisation, la structure peut comprendre une pluralité d'éléments de structure reliés entre eux qui définissent la porosité connectée. Par « reliés » on entend qu'ils sont reliés ou connectés entre eux au moins deux à deux.

Les éléments de structure peuvent avoir des formes variées, comme des parallélépipèdes, des poutres, des sphères, des ellipsoïdes, etc. Les éléments de structure peuvent être pleins ou creux. Les éléments de structure peuvent être en outre agencés en treillis.

Dans un exemple de réalisation, dans chaque volume élémentaire, un taux de pontage surfacique correspondant au rapport entre la somme des surfaces reliant deux éléments de structure entre eux et la somme des surfaces libres des éléments de structure peut être inférieur ou égal à 15%. De préférence, ce taux peut être inférieur à 10%. Ce taux de pontage surfacique est caractéristique du fait que les éléments de structure, qui constitueront ensemble le renfort d'une pièce en matériau CMC, sont plus ou moins reliés entre eux. Ce taux indique aussi la proportion de la surface du renfort qui sera « mouillée » par la matrice céramique dans la pièce en CMC. Un taux de pontage surfacique inférieur à 15% permet de réduire l'effort nécessaire pour que le renfort se brise entre deux éléments de structure et qu'ils puissent glisser l'un par rapport à l'autre en réponse à une forte contrainte, au lieu de se briser chacun. L'énergie se dissipe en effet mieux par glissement entre les éléments de structure que par leur rupture. Finalement, le glissement entre les éléments de structure est préférable dans le renfort d'un matériau CMC qu'une rupture fragile de ceux-ci.

Les éléments de structure sont des poutres. Les poutres peuvent par exemple avoir une section circulaire, elliptique, carrée ou rectangulaire.

Les poutres sont agencées de manière à former une structure 4D où les poutres sont orientées selon quatre directions données par les diagonales d'un cube. Les poutres peuvent former alors un treillis. Une telle structure est avantageuse pour obtenir une pièce en matériau CMC robuste et ayant des propriétés isotropes.

Dans un exemple de réalisation, la structure peut être frittée, c'est-à-dire être obtenue à l'aide d'une étape de frittage d'une poudre céramique par exemple.

Dans un exemple de réalisation, chaque volume élémentaire peut présenter une taille inférieure ou égale à 1 mm³.

Dans un exemple de réalisation, la longueur caractéristique peut être inférieure ou égale à 0,2 mm.

Dans un exemple de réalisation, le taux de porosité de chaque volume élémentaire peut être compris entre 60% et 80%.

Dans un exemple de réalisation, l'écart-type d'une distribution des longueurs caractéristiques des volumes élémentaires dans la structure peut être inférieur à 10% d'une valeur moyenne de ladite distribution dans la structure, et l'écart-type d'une distribution des taux de porosité des volumes élémentaires dans la structure peut être inférieur à 10% d'une valeur moyenne de ladite distribution dans la structure. Cette caractéristique assure que les propriétés de la structure poreuse qui sont liées à la tenue mécanique de la pièce en matériau CMC (longueur caractéristique de pore et porosité) sont homogènes dans la structure. Une telle homogénéité ne peut par exemple pas être obtenue avec un renfort fibreux tissé.

L'invention vise aussi, selon un deuxième aspect, un procédé de fabrication d'une structure poreuse telle que celle présentée ci-avant, comprenant la fabrication de la structure par fabrication additive. Par « fabrication additive », on entend tout procédé dans lequel on fabrique une pièce couche par couche à partir du dépôt d'un matériau sous diverses formes (pulvérulente, mélangé à un liant, en fusion, etc.). En particulier, la structure poreuse selon l'invention peut être obtenue par un procédé de frittage sélectif sur lit de poudre à l'aide d'un faisceau énergétique (laser ou électrons), qui est particulièrement adapté à la fabrication de pièces en céramique. On peut aussi utiliser un procédé du type impression 3D à jet de liant (« binder jetting ») dans lequel on projette un liant sur une couche de poudre de matériau de sorte à solidariser sélectivement une partie des grains formant la couche, on répète cette opération sur plusieurs couches jusqu'à obtenir une ébauche, puis on déliante et on fritte l'ensemble. On peut encore utiliser un procédé du type dépôt de fil, où on dépose un fil comprenant un liant et la poudre en plusieurs couches pour former une ébauche, puis on déliante et on fritte l'ensemble. D'autres procédés tels que la stéréo lithographie peuvent aussi être utilisés.

Selon un deuxième aspect, l'invention vise encore un procédé de fabrication d'une pièce en matériau composite à matrice céramique comprenant un renfort poreux densifié par une matrice, le procédé comprenant la fabrication d'une structure poreuse par un procédé tel que celui-ci-avant, et la formation d'une matrice céramique dans la porosité de la structure poreuse.

Dans un exemple de réalisation, la formation de la matrice céramique peut être réalisée par infiltration chimique en phase gazeuse (ou CVI pour « Chemical Vapor Infiltration »).

Dans un exemple de réalisation, la structure poreuse peut comprendre du carbure de silicium, et la formation de la matrice céramique peut comprendre l'introduction d'une poudre de carbone et/ou d'une poudre de carbure de silicium dans la porosité de la structure poreuse, puis l'infiltration de la porosité de la structure poreuse par du silicium ou un composé du silicium fondu (procédé MI pour « Melt Infiltration »). L'introduction de la poudre de carbone et/ou de la poudre de carbure de silicium peut être réalisée par injection d'une barbotine comprenant la ou les poudres en suspension dans la structure poreuse.

Dans un exemple de réalisation, la formation de la matrice céramique peut être réalisée par injection d'un polymère précurseur de matrice dans la porosité de la structure poreuse et traitement thermique de pyrolyse pour transformer le précurseur en matrice.

### Brève description des dessins

[Fig. 1] La figure 1 est une vue schématique d'une structure poreuse pour illustrer des caractéristiques de l'invention.
[Fig. 2] La figure 2 représente une structure poreuse selon un mode de réalisation avantageux de l'invention.
[Fig. 3] La figure 3 est une vue en coupe de la structure de la figure 2 selon le plan III.
[Fig. 4] La figure 4 montre deux poutres reliées entre elles.
[Fig. 5] La figure 5 est un ordinogramme illustrant les différentes étapes de plusieurs variantes de procédé de fabrication d'une pièce en matériau CMC selon selon l'invention.
[Fig. 6] La figure 6 montre un exemple de dispositif de fabrication additive par frittage sélectif sur lit de poudre.
[Fig. 7] La figure 7 montre un exemple de dispositif de fabrication additive par projection de liant.
[Fig. 8] La figure 8 montre un exemple de dispositif de fabrication additive par dépôt de fil.
[Fig. 9] La figure 9 montre une aube de turbine de turbomachine aéronautique.

### Description des modes de réalisation

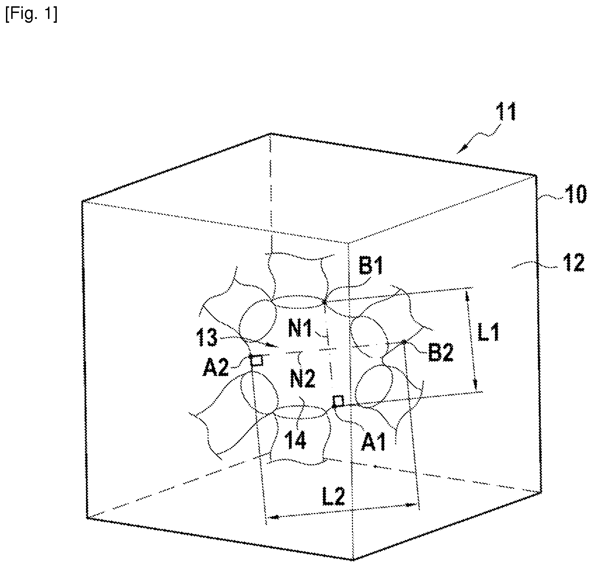

La figure 1 représente très schématiquement un volume élémentaire 10 d'une structure poreuse 11 comprenant du matériau céramique 12 et un ensemble de pores connectés à l'intérieur du matériau céramique 12, dont un seul pore 13 est représenté pour plus de lisibilité. La figure 1 a pour objectif d'illustrer des paramètres de l'invention.

La porosité à l'intérieur du matériau céramique est connectée, c'est-à-dire qu'il existe un chemin qui permet de passer d'un pore à l'autre de la structure sans traverser du matériau céramique. Cette porosité, et donc également le pore 13, est définie ou délimitée par une surface interne 14 du matériau céramique 12. Comme la porosité est connectée, cette surface interne 14 du matériau céramique est continue dans la structure. La surface délimitant le pore 13 est ainsi une partie de la surface interne, et est constituée d'une pluralité de points.

On a représenté un premier point A1 sur la surface interne délimitant le pore 13. On a représenté la normale N1 à la surface interne 14 prise au premier point A1, et un deuxième point associé B1 qui est lui aussi sur la surface interne 14 et aligné avec le premier point A1 selon la normale N1. A1 peut être vu comme le projeté orthogonal de B1 sur la surface interne 14. On peut définir une distance L1 qui correspond à la distance séparant le premier point A1 de son deuxième point associé B1. En d'autres termes A1 = p(B1) où p est la projection orthogonale.

De façon similaire, on a représenté un autre premier point A2 sur la surface interne délimitant le pore 13. On a représenté la normale N2 à la surface interne 14 prise au premier point A2, et un deuxième point associé B2 qui est lui aussi sur la surface interne 14 et aligné avec le premier point A2 selon la normale N2. A2 peut être vu comme le projeté orthogonal de B2 sur la surface interne 14. On peut définir une longueur L2 qui correspond à la distance séparant le premier point A2 de son deuxième point associé B2. En d'autres termes A2 = p(B2) où p est la projection orthogonale.

On définit alors une longueur caractéristique de pore LC qui correspond au maximum des distances Li où i correspond à un couple de points (Ai ; Bi) pour tout Ai de la surface interne 14 à l'intérieur du volume élémentaire. En d'autres termes, LC = max(Li).

Cette longueur caractéristique LC peut être déterminée, par exemple informatiquement au moment où l'on met au point le procédé de fabrication additive de la structure, ou a posteriori, par imagerie de coupes, ou par des procédés d'imagerie non invasifs tels qu'un scanneur à rayons X qui permet d'obtenir la forme des porosités à l'intérieur d'un volume donné.

Dans un volume élémentaire inférieur ou égal à 5 mm³ à l'intérieur d'une structure poreuse selon l'invention, la longueur LC est inférieure ou égale à 0,5 mm, ou préférentiellement inférieure ou égale à 0,2 mm. La porosité à l'intérieur d'un volume élémentaire est quant à elle supérieure ou égale à 50%, et de préférence comprise entre 60% et 80%. Ces caractéristiques sont avantageuses pour ensuite se servir de la structure en tant que renfort dans une pièce en matériau CMC, comme indiqué précédemment.

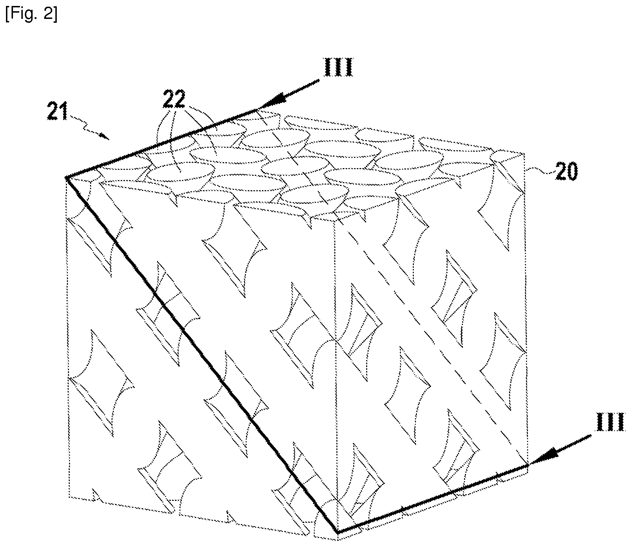

La figure 2 montre de façon schématique un autre volume élémentaire 20 dans une structure poreuse 21 selon un mode de réalisation de l'invention. La structure poreuse 21 comprend ici une pluralité d'éléments de structure sous la forme de poutres 22 en céramique reliées entre elles et agencées de manière à former une structure 4D où les poutres sont orientées selon quatre directions données par les diagonales d'un cube.

Dans cet exemple, les poutres présentent une section circulaire ayant un diamètre, de préférence compris entre 0,1 et 0,2 mm.

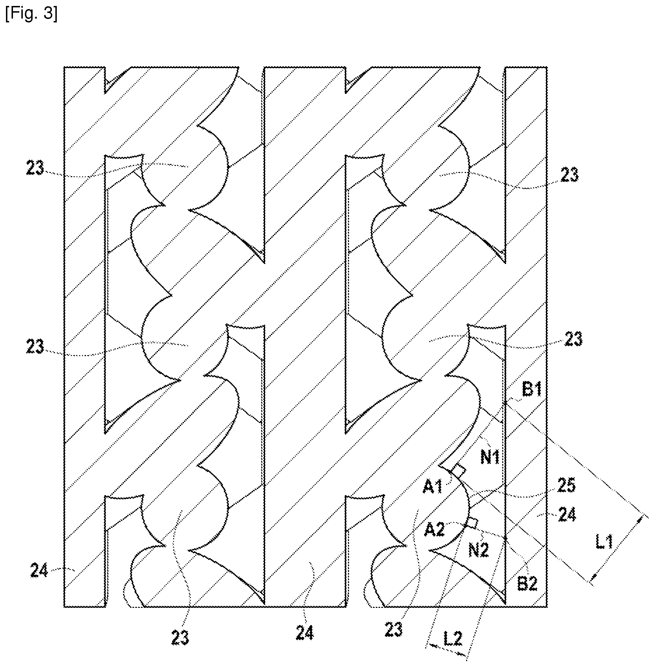

La figure 3 montre une coupe selon le plan III de la figure 2. Ce plan de coupe est perpendiculaire à certaines poutres qui sont identifiées par 23, et est parallèle à d'autres poutres identifiées par 24. On peut voir aussi la porosité qui est définie ici par les poutres de la structure. On a représenté deux premiers points A1 et A2 qui sont les projetés orthogonaux respectifs de B1 et B2 sur la surface interne 25 de la structure, correspondant à la surface des poutres. Les normales N1 et N2 sont dans le plan de la figure 3 par construction. Les distances L1 et L2 séparant respectivement les points A1-B1 et A2-B2 sont aussi représentées. Ainsi, on peut par exemple estimer la longueur caractéristique LC à partir de plusieurs coupes le long d'une poutre dans le volume élémentaire 20 en cherchant la longueur Li la plus grande qui sera caractéristique de la taille de pore dans le volume élémentaire.

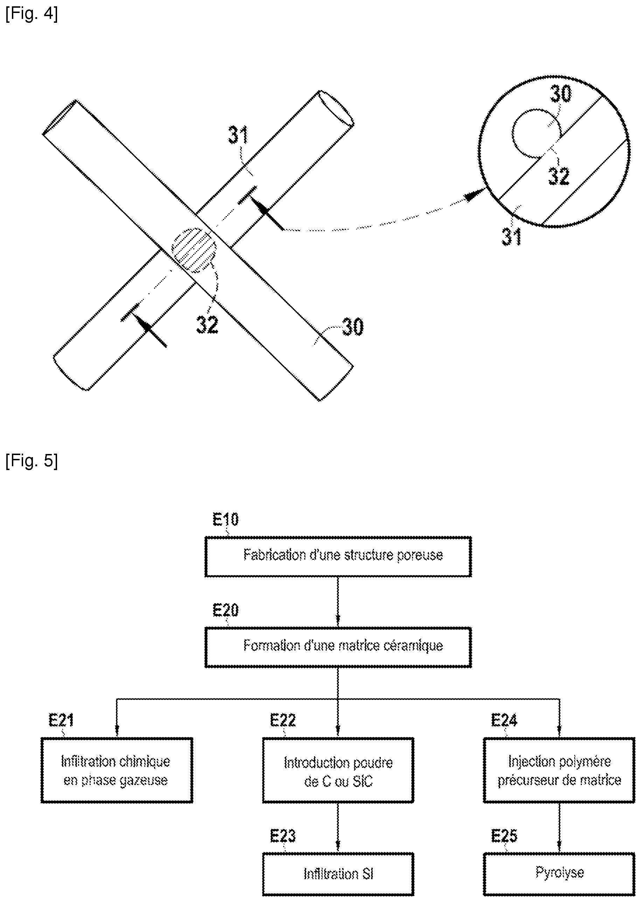

La figure 4 illustre la caractéristique selon laquelle deux poutres sont reliées entre elles. Cette figure montre une première poutre 30 qui est reliée à une deuxième poutre 31. On entend ainsi par « reliées » le fait que les poutres sont solidaires et partagent une surface de contact 32, comme illustré. On peut alors définir, dans un volume donné, un taux de pontage surfacique entre les poutres qui correspond au rapport entre la somme des surfaces de contact reliant les poutres entre elles et la somme des surfaces externes libres des poutres (qui pourra donc être en contact avec une matrice dans une pièce en CMC). Ce taux peut, dans une structure poreuse selon l'invention, être avantageusement inférieur à 15%, voire à 10%, de sorte à ce qu'il y ait plutôt un déchaussement du renfort par rapport à la matrice qu'une rupture fragile du renfort dans la pièce en matériau CMC.

La figure 5 regroupe sous la forme d'un ordinogramme unique, différents exemples de procédé de fabrication d'une pièce en matériau CMC mettant en œuvre une structure poreuse selon l'invention.

De façon générale, un procédé de fabrication d'une pièce en matériau CMC selon l'invention comprend au moins une première étape E1 de fabrication d'une structure poreuse, selon les caractéristiques énoncées précédemment et de préférence par fabrication additive, et une deuxième étape E2 de formation d'une matrice céramique dans la porosité de la structure poreuse.

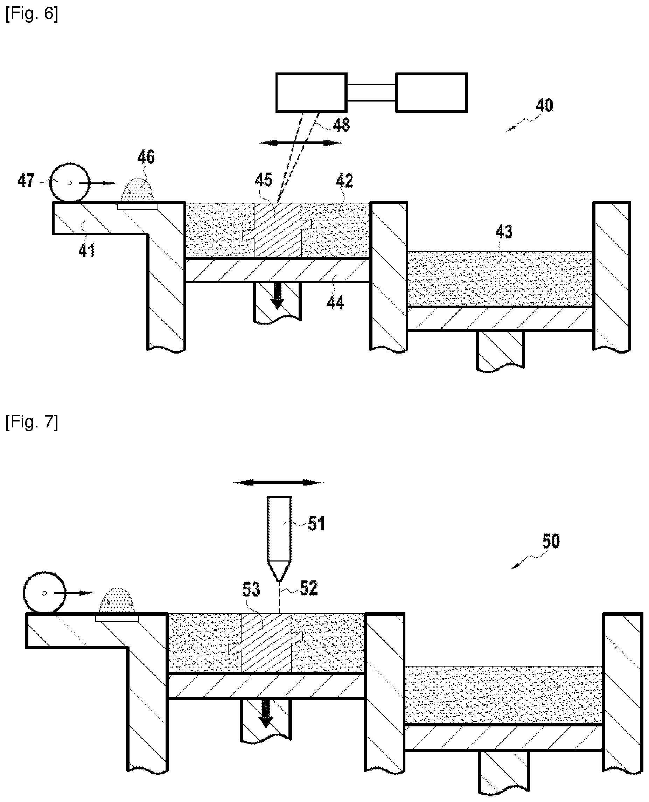

La première étape E1 de fabrication de la structure poreuse peut être réalisée avantageusement par fabrication additive. Les figures 6, 7 et 8 montrent très schématiquement trois dispositifs qui peuvent être utilisés pour fabriquer une structure poreuse conformément à l'invention.

La figure 6 montre un dispositif 40 pour mettre en œuvre un procédé de frittage sélectif sur lit de poudre. Le dispositif 40 comprend tout d'abord un bâti dont une partie est un plateau fixe 41, une autre partie comprend une zone de fabrication 42 située à côté du plateau fixe 41 dans laquelle la structure poreuse est destinée à être fabriquée, et un réservoir de récupération de poudre 43 situé à côté de la zone de fabrication 42 et à l'opposé du plateau fixe 41. La zone de fabrication 42 est munie d'un support 44 mobile destiné à recevoir de la poudre et sur lequel sera fabriquée la structure poreuse 45 (ici il s'agit d'une aube de turbine). Le support 44 prend ici la forme d'un plateau apte à se déplacer verticalement au fur et à mesure de la fabrication de la structure 45. De la poudre céramique 46 est distribuée tout au long du procédé de fabrication puis étalée, ici à l'aide d'un rouleau 47, pour former successivement des couches sur le support 44. Un faisceau laser (ou d'électrons) 48 est utilisé pour fritter sélectivement des parties d'une couche de poudre céramique qui vient d'être étalée.

La figure 7 montre un dispositif 50 pour mettre en œuvre un procédé de fabrication additive à jet de liant. Le dispositif 50 similaire au précédent, à l'exception qu'on utilise cette fois une tête d'impression 51 qui peut projeter un liant 52 sur une couche de poudre qui vient d'être étalée pour sélectivement lier des grains de poudre entre eux. Les caractéristiques identiques entre les dispositifs 40 et 50 ne seront pas décrites de nouveau. On obtient dans le dispositif 50 une ébauche 53 de la structure poreuse qui comprend un mélange de poudre céramique et de liant mis en forme. Il faut ensuite délianter (c'est-à-dire éliminer le liant présent dans l'ébauche) et fritter l'ébauche 53 pour obtenir la structure poreuse.

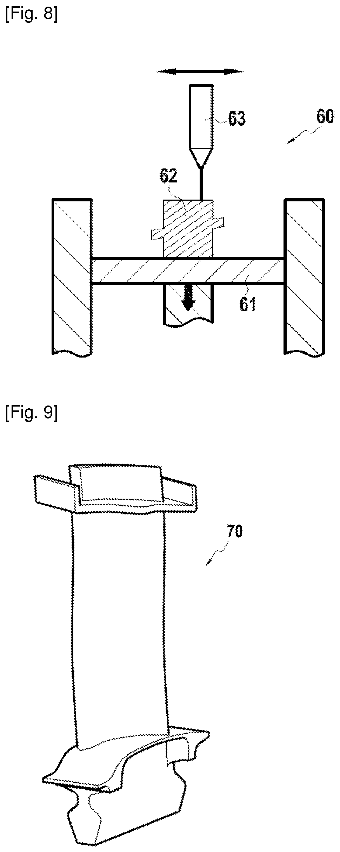

La figure 8 montre encore un autre dispositif 60 pour mettre en œuvre un procédé de fabrication additive par dépôt direct de matière. Ce dispositif 60 comprend un support 61 sur lequel une ébauche 62 de la structure poreuse est fabriquée, et qui peut ici se déplacer verticalement. Le dispositif 60 comprend une tête d'impression 63 qui est alimentée par un mélange de liant et de poudre céramique, par exemple sous la forme d'un fil solide. L'ébauche 62 est fabriquée couche par couche et la tête 63 forme chaque couche en déposant le mélange de liant et de poudre qui aura été préalablement chauffé. On obtient dans le dispositif 60 une ébauche 62 de la structure poreuse qui comprend un mélange de poudre céramique et de liant mis en forme. Il faut ensuite délianter et fritter l'ébauche 62 pour obtenir la structure poreuse.

La poudre céramique utilisée peut comprendre par exemple du carbure de silicium, de l'alumine, ou d'autres matériaux céramiques.

D'autres procédés et dispositifs que ceux décrits ci-avant sont bien entendu envisageables pour obtenir une structure poreuse selon l'invention.

L'étape E2 suivante consiste à former une matrice en céramique dans la porosité de la structure poreuse.

Selon un premier exemple, on peut former la matrice par infiltration chimique en phase gazeuse CVI (étape E21), c'est-à-dire qu'on infiltre la porosité de la structure poreuse avec un précurseur de matrice en phase gazeuse qui s'y déposera, de façon connue en soi.

Selon un deuxième exemple, pour former la matrice, on peut tout d'abord introduire une poudre en carbone ou en carbure de silicium dans la porosité de la structure poreuse (étape E22) en injectant par exemple une barbotine comprenant la ou les poudres en suspension, puis on infiltre la structure par du silicium ou un composé du silicium fondu (étape E23). On obtient avec cet exemple une pièce en matériau CMC ayant une matrice en carbure de silicium.

Selon un troisième exemple, on peut former la matrice par injection d'un polymère précurseur de matrice (étape E24) dans la porosité de la structure poreuse, puis traitement thermique de pyrolyse (étape E25) du précurseur pour former la matrice.

On notera que le procédé peut comprendre, avant la formation de la matrice dans la porosité de la structure poreuse (étape E20) une étape de formation d'une interphase de défragilisation sur la structure poreuse, c'est-à-dire sur la surface interne de la structure poreuse. L'interphase peut être monocouche ou multicouches. L'interphase peut être déposée de façon connue par CVI. Cette interphase, qui peut comprendre par exemple du carbure de silicium SiC, du nitrure de bore BN, du nitrure de bore dopé au silicium BN(Si), ou du pyrocarbone PyC. L'interphase a une fonction de défragilisation du matériau composite qui favorise la déviation de fissures éventuelles parvenant à l'interphase après s'être propagées dans la matrice, empêchant ou retardant la rupture du renfort obtenu avec la structure poreuse.

Il peut être ainsi encore plus avantageux de combiner une structure poreuse selon l'invention qui comprend des éléments de renfort reliés avec un taux de pontage surfacique inférieur ou égal à 15% et qui sont recouverts d'une interphase de défragilisation pour augmenter encore la tenue mécanique de la pièce en matériau CMC obtenue. Une telle combinaison permet en effet de favoriser un déchaussement au sein de l'interphase plutôt qu'une rupture fragile des éléments de structure.

Enfin, il est particulièrement avantageux de fabriquer des pièces de turbomachine aéronautique par les procédés décrits ci-avant, et notamment destinées à être utilisées dans des parties chaudes de la turbomachine comme une turbine. Par exemple, on peut fabriquer une aube de turbine 70 telle que celle illustrée sur la figure 9.

## Revendications

1. Structure poreuse (11 ; 21) en céramique destinée à former le renfort d'une pièce en matériau composite à matrice céramique, la structure présentant une porosité connectée délimitée par une surface interne (14 ; 25) qui comprend une pluralité de premiers points (A1, A2), à chaque premier point étant associé un deuxième point (B1, B2) aligné avec ce premier point le long d'une normale (N1, N2) à la surface interne prise au premier point, la structure étant divisible en une pluralité de volumes élémentaires (10 ; 20) de taille inférieure ou égale à 5 mm³ dans chacun desquels :
- une longueur caractéristique de pore (LC), correspondant au maximum de la distance (L1, L2) séparant chaque premier point (A1, A2) de son deuxième point associé (B1, B2), est inférieure ou égale à 0,5 mm ; et
- un taux de porosité est supérieur ou égal à 50% ; et
comprenant une pluralité d'éléments de structure (22) reliés entre eux qui définissent la porosité connectée, dans laquelle, dans chaque volume élémentaire (20), un taux de pontage surfacique correspondant au rapport entre la somme des surfaces reliant deux éléments de structure (22) entre eux et la somme des surfaces libres des éléments de structure est inférieur ou égal à 15%, dans laquelle les éléments de structure (22) sont des poutres et dans laquelle les poutres (22) sont agencées de manière à former une structure 4D où les poutres sont orientées selon quatre directions données par les diagonales d'un cube.

2. Structure selon la revendication 1, dans laquelle la structure est frittée.

3. Structure selon l'une des revendications 1 ou 2, dans laquelle chaque volume élémentaire (10 ; 20) présente une taille inférieure ou égale à 1 mm³.

4. Structure selon l'une quelconque des revendications 1 à 3, dans laquelle la longueur caractéristique (LC) est inférieure ou égale à 0,2 mm.

5. Structure selon l'une quelconque des revendications 1 à 4, dans laquelle le taux de porosité de chaque volume élémentaire (10 ; 20) est compris entre 60% et 80%.

6. Structure selon l'une quelconque des revendications 1 à 5, dans laquelle l'écart-type d'une distribution des longueurs caractéristiques (LC) des volumes élémentaires (10 ; 20) dans la structure est inférieur à 10% d'une valeur moyenne de ladite distribution dans la structure, et l'écart-type d'une distribution des taux de porosité des volumes élémentaires (10 ; 20) dans la structure est inférieur à 10% d'une valeur moyenne de ladite distribution dans la structure.

7. Procédé de fabrication d'une structure poreuse selon l'une quelconque des revendications 1 à 6, comprenant la fabrication de la structure (E10) par fabrication additive.

8. Procédé de fabrication d'une pièce en matériau composite à matrice céramique comprenant un renfort poreux densifié par une matrice, le procédé comprenant la fabrication d'une structure poreuse (E10) par un procédé selon la revendication 7, et la formation d'une matrice céramique (E20) dans la porosité de la structure poreuse.

9. Procédé selon la revendication 8, dans lequel la formation de la matrice céramique (E20) est réalisée par infiltration chimique en phase gazeuse (E21).

10. Procédé selon la revendication 8, dans lequel la structure poreuse comprend du carbure de silicium, et la formation de la matrice céramique (E20) comprend l'introduction (E22) d'une poudre de carbone et/ou d'une poudre de carbure de silicium dans la porosité de la structure poreuse, puis l'infiltration (E23) de la porosité de la structure poreuse par du silicium ou un composé du silicium fondu.

11. Procédé selon la revendication 8, dans lequel la formation de la matrice céramique (E20) est réalisée par injection (E24) d'un polymère précurseur de matrice dans la porosité de la structure poreuse et traitement thermique de pyrolyse (E25) pour transformer le précurseur en matrice.

## Patentansprüche

1. Poröse Struktur (11; 21) aus Keramik, die dazu bestimmt ist, die Verstärkung eines Teils aus Verbundmaterial mit keramischer Matrix zu bilden, wobei die Struktur eine verbundene Porosität aufweist, die durch eine innere Oberfläche (14; 25) begrenzt ist, die eine Vielzahl von ersten Punkten (A1, A2) umfasst, wobei mit jedem ersten Punkt ein zweiter Punkt (B1, B2) assoziiert ist, der mit diesem ersten Punkt entlang einer Senkrechten (N1, N2) auf die innere Oberfläche, die an dem ersten Punkt genommen wird, ausgerichtet ist, wobei die Struktur in eine Vielzahl von Elementarvolumen (10; 20) mit einer Größe von kleiner als oder gleich wie 5 mm³ unterteilbar ist, wobei in jedem davon:
- eine charakteristische Porenlänge (LC), die dem Maximum des Abstands (L1, L2) zwischen jedem ersten Punkt (A1, A2) und seinem assoziierten zweiten Punkt (B1, B2) entspricht, kleiner als oder gleich wie 0,5 mm ist; und
- ein Porositätsgrad größer als oder gleich wie 50 % ist; und
umfassend eine Vielzahl von miteinander verbundenen Strukturelementen (22), die die verbundene Porosität definieren, wobei in jedem Elementarvolumen (20) ein flächenbezogener Überbrückungsgrad, der dem Verhältnis zwischen der Summe der Flächen, die zwei Strukturelemente (22) miteinander verbinden, und der Summe der freien Flächen der Strukturelemente entspricht, kleiner als oder gleich wie 15 % ist, wobei die Strukturelemente (22) Balken sind und wobei die Balken (22) angeordnet sind, um eine 4D-Struktur zu bilden, bei der die Balken in vier Richtungen ausgerichtet sind, die durch die Diagonalen eines Würfels gegeben sind.

2. Struktur nach Anspruch 1, wobei die Struktur gesintert ist.

3. Struktur nach einem der Ansprüche 1 oder 2, wobei jedes Elementarvolumen (10; 20) eine Größe von weniger als oder gleich wie 1 mm³ aufweist.

4. Struktur nach einem der Ansprüche 1 bis 3, wobei die charakteristische Länge (LC) kleiner als oder gleich wie 0,2 mm ist.

5. Struktur nach einem der Ansprüche 1 bis 4, wobei der Porositätsgrad von jedem Elementarvolumen (10; 20) zwischen 60 % und 80 % ist.

6. Struktur nach einem der Ansprüche 1 bis 5, wobei die Standardabweichung einer Verteilung der charakteristischen Längen (LC) der Elementarvolumina (10; 20) in der Struktur weniger als 10 % eines Mittelwerts der Verteilung in der Struktur ist und die Standardabweichung einer Verteilung der Porositätsraten der Elementarvolumina (10; 20) in der Struktur weniger als 10 % eines Mittelwerts der Verteilung in der Struktur ist.

7. Herstellungsverfahren einer porösen Struktur nach einem der Ansprüche 1 bis 6, umfassend die Herstellung der Struktur (E10) durch additive Fertigung.

8. Herstellungsverfahren eines Teils aus Verbundmaterial mit keramischer Matrix, umfassend eine poröse Verstärkung, die durch eine Matrix verdichtet ist, das Verfahren umfassend die Herstellung einer porösen Struktur (E10) durch ein Verfahren nach Anspruch 7 und die Bildung einer keramischen Matrix (E20) in der Porosität der porösen Struktur.

9. Verfahren nach Anspruch 8, wobei die Bildung der keramischen Matrix (E20) durch chemische Infiltration in Gasphase (E21) erfolgt.

10. Verfahren nach Anspruch 8, wobei die poröse Struktur Siliciumcarbid umfasst und die Bildung der keramischen Matrix (E20) das Einbringen (E22) eines Kohlenstoffpulvers und/oder eines Siliciumcarbidpulvers in die Porosität der porösen Struktur und dann das Infiltrieren (E23) der Porosität der porösen Struktur mit geschmolzenem Silicium oder einer Siliciumverbindung umfasst.

11. Verfahren nach Anspruch 8, wobei die Bildung der keramischen Matrix (E20) durch Einspritzen (E24) eines Matrixvorläuferpolymers in die Porosität der porösen Struktur und pyrolytische Wärmebehandlung (E25) zum Umwandeln des Vorläufers in die Matrix durchgeführt wird.

## Claims

1. A porous ceramic structure (11; 21) intended to form the reinforcement of a ceramic matrix composite component, the structure having a connected porosity delimited by an internal surface (14; 25) which comprises a plurality of first points (A1, A2), each first point being associated with a second point (B1, B2) aligned with this first point along a normal (N1, N2) to the internal surface taken at the first point, the structure being divisible into a plurality of unit volumes (10; 20) of a size less than or equal to 5 mm³ in each of which:
- a characteristic pore length (LC), corresponding to the maximum of the distance (L1, L2) separating each first point (A1, A2) from its associated second point (B1, B2), is less than or equal to 0.5 mm; and
- a porosity ratio is greater than or equal to 50%; and
comprising a plurality of interconnected structural elements (22) which define the connected porosity, wherein in each unit volume (20) a surface bridging ratio corresponding to the ratio between the sum of the surfaces connecting two structural elements (22) to each other and the sum of the free surfaces of the structural elements is less than or equal to 15%, wherein the structural elements (22) are beams and wherein the beams (22) are arranged to form a 4D structure where the beams are oriented in four directions given by the diagonals of a cube.

2. The structure as claimed in claim 1, wherein the structure is sintered.

3. The structure as claimed in claim 1 or 2, wherein each unit volume (10; 20) has a size less than or equal to 1 mm³.

4. The structure as claimed in any one of claims 1 to 3, wherein the characteristic length (LC) is less than or equal to 0.2 mm.

5. The structure as claimed in any one of claims 1 to 4, wherein the porosity ratio of each unit volume (10; 20) is comprised between 60% and 80%.

6. The structure as claimed in any one of claims 1 to 5, wherein the standard deviation of a distribution of characteristic lengths (LC) of the unit volumes (10; 20) in the structure is less than 10% of a mean value of said distribution in the structure, and the standard deviation of a distribution of porosity ratios of unit volumes (10; 20) in the structure is less than 10% of a mean value of said distribution in the structure.

7. A process for manufacturing a porous structure as claimed in any one of claims 1 to 6, comprising manufacturing the structure (S10) by additive manufacturing.

8. A process for manufacturing a ceramic matrix composite component comprising a matrix-densified porous reinforcement, the process comprising manufacturing a porous structure (S10) by a process as claimed in claim 7, and forming a ceramic matrix (S20) in the porosity of the porous structure.

9. The process as claimed in claim 8, wherein the formation of the ceramic matrix (S20) is achieved by chemical vapor infiltration (S21).

10. The process as claimed in claim 8, wherein the porous structure comprises silicon carbide, and the formation of the ceramic matrix (S20) comprises introducing (S22) a carbon powder and/or a silicon carbide powder into the porosity of the porous structure, and then infiltrating (S23) the porosity of the porous structure with silicon or a molten silicon compound.

11. The process as claimed in claim 8, wherein the formation of the ceramic matrix (S20) is achieved by injecting (S24) a matrix precursor polymer into the porosity of the porous structure and pyrolysis heat treatment (S25) to convert the precursor to the matrix.
